# EUROPEAN PATENT SPECIFICATION

(11) **EP 3 023 658 B1**
(45) Date of publication and mention of the grant of the patent: **21.06.2017**
(21) Application number: 15189541.4
(22) Date of filing: 13.10.2015
(51) Int. Cl.: F16C 19/52, F16C 33/78, B61F 15/26, F16C 41/00, F16C 19/38

(54) **TWO PIECE ANNULAR PROTECTIVE COVER WITH A SENSOR UNIT FOR AN AXLE-BOX-BEARING UNIT OF A RAIL VEHICLE AND AXLE-BOX-BEARING UNIT WITH THE PROTECTIVE COVER**
ZWEITEILIGE RINGFÖRMIGE SCHUTZABDECKUNG MIT EINER SENSORANORDNUNG FÜR EINE ACHSBUCHSE-LAGERANORDNUNG EINES SCHIENENFAHRZEUGES UND EINE ACHSBUCHSE-LAGERANORDNUNG MIT DER SCHUTZABDECKUNG
COUVERCLE ANNULAIRE DE PROTECTION EN DEUX PIÈCES AVEC UN ENSEMBLE CAPTEUR POUR UN ENSEMBLE BOÎTE D'ESSIEU ET PALIER POUR VÉHICULE FERROVIAIRE ET UN ENSEMBLE BOÎTE D'ESSIEU ET PALIER AVEC LE COUVERCLE DE PROTECTION

(30) Priority: 30.10.2014 IT TO20140887
(43) Date of publication of application: 25.05.2016
(73) Proprietor: Aktiebolaget SKF, 41 550 Göteborg (SE)
(72) Inventor: ROBERTI, Andrea, 10060 Buriasco (TO) (IT); SOZZI, Fabrizio, 10050 Sant' Antonino di Susa (IT)
(74) Representative: Tedeschini, Luca

(56) References cited:
- EP-A1- 0 976 638
- WO-A1-2007/065413
- WO-A1-2010/116206
- WO-A1-2012/074479
- WO-A1-2012/080779
- FR-A1- 3 001 538
- JP-A- 2000 221 205
- US-A1- 2013 121 629
- US-A1- 2014 130 618

## Description

### Technical field of the invention

The present invention concerns a sensorized axlebox-bearing unit for supporting a railway axle. The invention further concerns an associated sensorized cover.

### Prior art

As is known, for example from US3741614, a railway vehicle is supported by a number of railway axles or merely axles, on each of which a pair of wheels is keyed; each end of the axle is supported by an axlebox-bearing unit comprising an axlebox secured by means of appropriate suspensions to the railway carriage and a rolling bearing. In this type of axle, the axlebox-bearing units of each axle are therefore arranged, with respect to the wheels, on the outboard side, i.e. facing an outer side of the railway vehicle, so that the axlebox-bearing unit can be easily accessed from the outside of the vehicle.

It is further known, for example from WO2007/065413, which discloses a bearing unit with features of the preamble of claim 1 respectively a cover according to the preamble of claim 9, that an outer ring of the rolling bearing is fitted within a housing element of the axlebox, generally annular and in use stationary, which supports towards the outside of the axlebox also a sealing gasket to which a sensor module is fixed, a data transmission cable of which passes laterally through the housing element. This type of axle and relative axlebox-bearing unit can therefore be sensorized without particular Also FR 3 001 538 A discloses the features of the preamble of claim 1 respectively claim 9. Types of axle exist in which the wheels are press-fitted at the ends of the axles and in which the axlebox-bearing units are therefore arranged, with respect to the wheels, on the inboard side of the railway vehicle, i.e. facing the inside of the vehicle.

In these cases, the assembly of a sensor module in the area of the axle and/or within the axlebox-bearing unit is extremely difficult, and maintenance is even more so, since the operator has to work without visibility and in limited spaces with the railway vehicle generally arranged on the ground.

### Summary of the invention

The object of the present invention is to provide a sensorized axlebox-bearing unit for supporting a railway axle which is compact and reliable and that allows assembly and disassembly of the sensor module in a rapid simple manner.

On the basis of the invention, a sensorized axlebox-bearing unit for supporting a railway axle and an associated sensorized cover are therefore provided, having the characteristics described in the appended claims.

### Brief description of the drawings

The invention will now be described with reference to the accompanying drawings, which illustrate a non-limiting embodiment thereof, in which:
- figure 1 schematically illustrates a perspective view, from an inboard side of a railway vehicle, of a railway axle provided with an axlebox-bearing unit produced according to the invention;
- figure 2 illustrates on an enlarged scale a radial section elevation view of the axlebox-bearing unit of figure 1; and
- figure 3 illustrates a three-quarter perspective top view on a further enlarged scale of an element of the axlebox-bearing unit according to the invention.

### Detailed disclosure

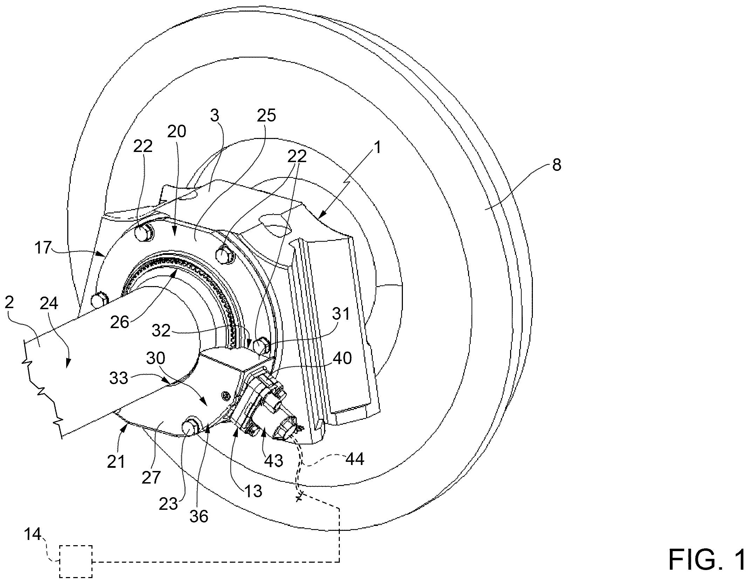

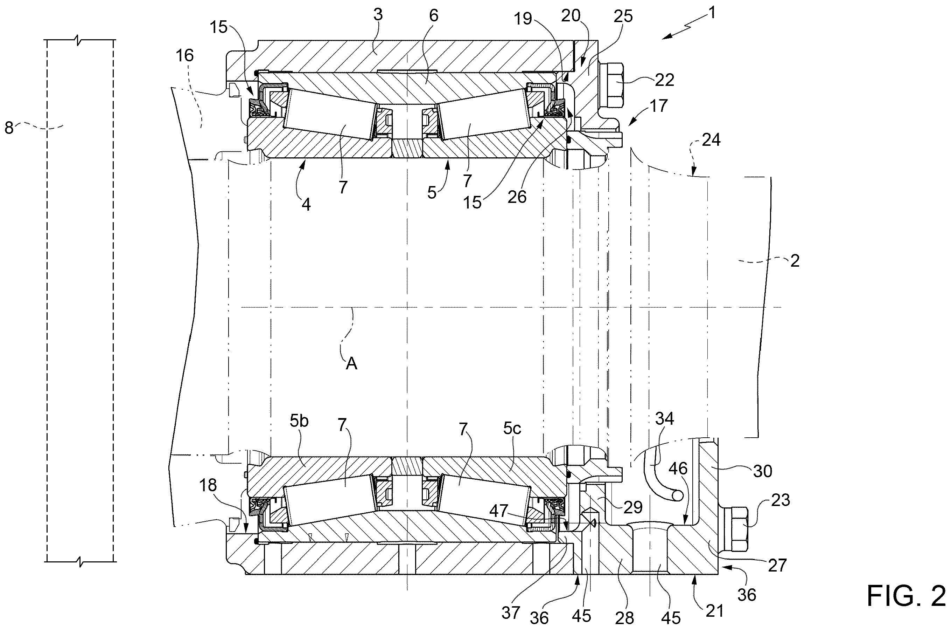

With reference to figures 1 and 2, the number 1 indicates overall a sensorized axlebox-bearing unit for supporting a railway axle 2, comprising an axlebox 3 adapted to be fixed in a stationary position below a railway vehicle, known and not illustrated for the sake of simplicity, and a rolling bearing 4 carried within the axlebox 3 and in turn comprising an inner ring 5 adapted to receive in use the railway axle 2 to make it rotatable with respect to the axlebox 3 about a common symmetry axis A, an outer ring 6 fitted stationary in the axlebox 3 and a plurality of rolling bodies 7 interposed between the rings 5 and 6; in the example illustrated, the ring 5 is produced by means of two coupled annular ring portions 5b,5c and is fixed integral with the axle 2, which in use rotates about the axis A and terminates on both its opposite sides with respective wheels 8 (only one side and the respective wheel 8 are illustrated for the sake of simplicity); with respect to said wheel 8, the axlebox 1 is arranged in an inboard position, i.e. facing the inside of the railway vehicle.

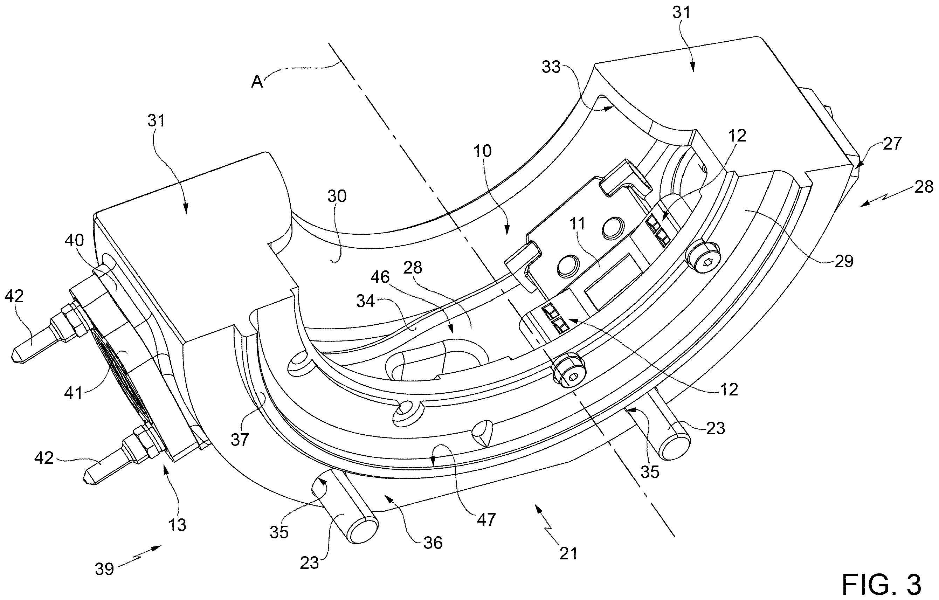

The axlebox-bearing unit 1 further comprises a sensor unit 10 (figure 3) comprising a sensor module 11 mounted, as will be seen, integral with the axlebox 3 and close to the inner ring 5 of the bearing 4 and provided with a plurality of transmission elements 12, known and not illustrated in detail for the sake of simplicity, for monitoring the axle 2, and a connection plug 13 to be connected to an electronic data processing unit 14, illustrated schematically by a broken line in figure 1.

The unit 1 further comprises respective sealing assemblies 15 arranged to protect the rolling bearing 4, a front cover 16 and a rear cover 17 to close opposite first (18) and second (19) frontal circular inlet openings of the axlebox 3.

According to the invention, the rear cover 17 is made in the shape of two independent half rings or circumferential ring stretches 20,21 integrally fixed to the rear inlet opening 19 of the axlebox 3, said inlet opening 19 facing in use an inboard side (i.e. facing in use the inside of the railway vehicle) of the axle 2; the cover 17 is therefore the one facing the inboard side of the axle 2.

The two ring stretches 20,21 are fixed to the axlebox 3, to close the inlet opening 19, by means of respective screws 22 and 23; the two ring stretches 20,21 are further adapted to couple in use with a radially outer cylindrical lateral surface 24 of the axle 2.

The first ring stretch 20 is defined by a semicircular profile flange 25 arranged to close a first upper circumferential portion 26 of the rear inlet opening 19 of the axlebox 3; the second ring stretch 21 is defined by a semicircular profile box 27 shaped as a polygonal radial section circumferential stretch of toroid, i.e. as a torus generated by rotation of a polygon, irregular in the example illustrated, instead of a circle about the common symmetry axis A of the unit 1, the axlebox 3, the axle 2 and the cover 17.

Here and below, with "semicircular profile" it is intended a profile having an angular extension not necessarily equal to an half of a circumference, but that extends over an circumference arc equal to, or greater than, or less than, 180°.

The box 27 (figure 3), which forms according to the description a toroidal circumferential sector or portion, is delimited by a radially outer cylindrical lateral wall 28 coaxial with the symmetry axis A, by opposite first and second frontal walls 29 and 30 having semicircular profile arranged substantially perpendicular to the symmetry axis A and to the lateral wall 27, and by a pair of flat radial walls 31 perpendicular to the frontal walls 29,30 and adapted to couple in contact with respective radial end edges 32 of the first ring stretch 20, only one of which can be seen in figure 1.

In this way, the box 27 is internally hollow and has, towards the symmetry axis A, a circumferential opening 33 facing said symmetry axis A and delimited by the walls 31, which define together a radially open lateral wall of the box 27.

The second ring stretch 21 is fixed, as will be seen, integral with the rear inlet opening 19 of the axlebox 3 in an independent manner from the first ring stretch 20.

According to a further aspect of the invention, the sensor module 11 is integrally carried, radially on the inside, by the radially outer cylindrical lateral wall 28 of the box 27, since it has been bench pre-assembled within the box 27, in a position facing the circumferential opening 33; similarly, the connection plug 13 is integrally carried, radially on the outside, by the radially outer cylindrical lateral wall 28 of the box 27, and is connected to the sensor module 11 by means of an electric cable arranged within the box 27 and against the radially outer cylindrical lateral wall 28 of the box 27, since also the plug 13 with the cable 34 are bench pre-assembled and tested, directly on the box 27.

The opposite first and second frontal walls 29,30 having semicircular profile are substantially flat and are perpendicular to the radially outer cylindrical lateral wall 28 of the box 27.

The box 27 defining the second ring stretch 21 is provided with at least one pair of axial holes 35 (figure 3) made through a radial thickness of the radially outer cylindrical lateral wall 28 and through respective radially outer peripheral edges 36 of the first and second frontal wall 29,30; said axial holes 35 are engaged in a through manner by the respective fixing screws 23 of the ring stretch 21 to the axlebox 3, as is clearly illustrated in figure 3.

The radially outer peripheral edge 36 of the frontal wall 29, which faces the axlebox 3, is provided with a semicircular cylindrical projection 37 having circumferential extension equal to that of the box 27 and which couples in contact with the first frontal circular inlet opening 19 of the axlebox 3 (figure 2), acting as a support and centring for the ring stretch 21.

According to one aspect of the invention, the circumferential extension of the second ring stretch 21 defined by the box 27 is less than 180°; the flat radial walls 31 of the box 27 are therefore arranged so as to be non-parallel to each other, but to form an obtuse angle. The circumferential extension of the first ring stretch 20 is consequently greater than 180°, so that its end edges 32, when the ring stretches 20,21 are assembled on the axlebox 3, are in contact with the flat radial walls 31 so that the inlet opening 19 is completely closed by the ring stretches 20,21 coupled to form the cover 17. In fact, it has been noted that this configuration facilitates disassembly and re-assembly in use of the ring stretch 21.

For the same purpose, the sensor module 11 and the connection plug 13 are carried fixed on the box 27 defining the second ring stretch 21 in different radial positions, on opposite sides 38,39 of the box 27 with respect to the symmetry axis A (figure 3).

The connection plug 13 is mounted on a radially outer circumferential flat projection 40 of the radially outer cylindrical lateral wall 28 of the box 27 and comprises a female connector 41 and a pair of stud bolts 42 (figure 3) for fixing in use, on the second ring stretch 21, a male connector 43 (figure 1), known, provided with data transmission cable 44 or unit for wireless transmission toward the processing unit 14.

The box 27 defining the second ring stretch 21 is lastly provided, radially through the radially outer cylindrical lateral wall 28, with draining holes 45 (figure 2) arranged in an angular position between the sensor module 11 and the connection plug 13.

A radially inner lateral surface 46 of the lateral wall 28 carries fixed to it the sensor module 11 and receives in contact the cable 34 and is obtained substantially flush with a radially inner lateral surface 47 of the projection 37; in this way the sensor module 11 is in use integrally fixed in a stationary position to the axlebox 3 very near to the bearing 4, in particular to the inner ring 5 and to the relative axle 2, and is thus able to monitor both with high efficiency, detecting the temperature, the rotation speed and other parameters of interest.

On the basis of the description provided, it is evident that the axlebox-bearing unit 1 described is a traditional type unit with rear cover replaced by a separate sensorized cover 17 to form two ring stretches 20,21 one of which, in this case the ring stretch 21, is shaped like a semitoroidal box 27 (i.e. defining a circumferential stretch of a toroid) and contains a sensor module 11 with the relative electrical connections.

The invention is therefore also relative to a sensorized cover 17 for an axlebox-bearing unit 1 for supporting a railway axle 2 selected as rear cover and designed to be mounted on the axlebox-bearing unit 1 on the inboard side of the axle 2 and is produced "split", in the form of a first ring stretch 20 and a second ring stretch 21 independent of each other, designed to close the rear inlet opening 19 of the axlebox-bearing unit 1 and adapted to couple in use with the radially outer cylindrical lateral surface 24 of the axle 2.

As already described, the first ring stretch 20 is defined by a semicircular profile flange 25 adapted to close a first circumferential portion 26 of the rear inlet opening 19; while the second ring stretch 21 is defined by a semicircular profile box 27 shaped as a segment or portion or sector of polygonal radial section toroid delimited by a radially outer cylindrical lateral wall 28, by opposite first and second frontal walls 29,30 having a semicircular profile arranged substantially perpendicular to the lateral wall 28, and by a pair of flat radial walls 31 perpendicular to the frontal walls 29,30 and adapted to couple in contact with respective radial end edges 32 of the first ring stretch 20, so as to close the circumferential portion of the inlet opening 19 left free by the ring stretch 20.

The box 27 is internally hollow and has, towards its symmetry axis A, a circumferential opening 33, a sensor module 11 being integrally carried, radially on the inside, by the cylindrical lateral wall 28, fixed to the radially inner surface 46 thereof, pre-assembled within the box 27 in a position facing the circumferential opening 33, while a connection plug 13 of the sensor module 11 is integrally carried, radially on the outside, by the cylindrical lateral wall 28 and is connected to the sensor module 11 by means of an electric cable 34 arranged within the box 27 and against the lateral wall 28.

In this way, the sensor module 11 is handily bench mounted and tested inside the box 27; the latter is then assembled on the axlebox 3 as normally for a traditional cover, for example after coupling the male connector 43; this means that the inlet opening 19 is efficiently closed and the sensor module 11 is fixed in a simple manner to the axlebox 3 in the area of the axle 2 by means of the fixing screws 23 of the ring stretch 21, with a simple compact solution having reduced overall dimensions, easy to assemble and disassemble.

All the objects of the invention have therefore been achieved.

## Claims

1. A sensorized axlebox-bearing unit (1) for supporting a railway axle (2), comprising an axlebox (3) adapted to be fixed in a stationary position; a rolling bearing (4) carried within the axlebox and comprising an inner ring (5) adapted to receive, in use, the railway axle (2) to make it rotatable with respect to the axlebox about a common symmetry axis (A); a sensor unit (10) comprising a sensor module (11) integrally mounted to the axlebox and close to the inner ring (5) of the bearing, and provided with a plurality of transmission elements (12) for monitoring the axle and with a connection plug (13) to be connected to an electronic data processing unit (14); respective sealing assemblies (15) arranged to protect the rolling bearing; and a front cover (16) and a rear cover (17) to close opposite first (19) and second (18) frontal circular inlet openings of the axlebox; **characterized in that**, in combination:
i)- the rear cover (17) is made in the shape of two independent ring stretches (20; 21) integrally fixed, by means of respective screws (22, 23), to the first rear inlet opening (19) of the axlebox, facing in use an "inboard" side of the axle (2); the two ring stretches (20, 21) being adapted to couple, in use, with a radially outer cylindrical lateral surface (24) of the axle (2);
ii)- a first ring stretch (20) being defined by a semicircular profile flange (25) arranged to close a first circumferential portion (26) of the rear inlet opening (19) of the axlebox (3);
iii)- the second ring stretch (21) being defined by a semicircular profile box (27) shaped as a polygonal radial section toroid delimited by a radially outer cylindrical lateral wall (28) which is coaxial with the symmetry axis (A), by opposite first (29) and second (30) frontal walls having a semicircular profile, which are arranged substantially perpendicular to the symmetry axis (A), and by a pair of flat radial walls (31) perpendicular to the frontal walls (29, 30) and adapted to couple in contact with respective radial end edges (32) of the first ring stretch (20), so that the box (27) is internally hollow and has, toward the symmetry axis (A), a circumferential opening (33) facing the symmetry axis (A); the second ring stretch (21) being integrally fixed to the rear inlet opening (19) of the axlebox independently of the first ring stretch (20);
iv)- the sensor module (11) being integrally carried, radially on the inside, by the radially outer cylindrical lateral wall (28) of the box (27), pre-assembled within the box in a position facing the circumferential opening (33), while the connection plug (13) is integrally carried, radially on the outside, by the radially outer cylindrical lateral wall (28) of the box and is connected to the sensor module (11) by means of an electric cable (34) arranged within the box (27) and against the radially outer cylindrical lateral wall (28) of the box.

2. A sensorized axlebox-bearing unit according to claim 1, **characterized in that** the opposite first and second frontal walls (29, 30) having a semicircular profile are substantially flat and are perpendicular to the radially outer cylindrical lateral wall (28) of the box.

3. A sensorized axlebox-bearing unit according to claim 1 or 2, **characterized in that** the box (27) defining the second ring stretch (21) is provided with at least one pair of axial holes (35) made through a radial thickness of the radially outer cylindrical lateral wall (28) and through respective radially outer peripheral edges (36) of the first and second frontal walls (29, 30), which axial holes (35) are engaged by respective fixing screws (23) to be fixed to the axlebox (3).

4. A sensorized axlebox-bearing unit according to claim 3, **characterized in that** the radially outer peripheral edge (36) of the first frontal wall (29), which faces the axlebox (3), is provided with a semicircular cylindrical projection (37) having a circumferential extension equal to that of the box (27) and which couples within the first frontal circular inlet opening (19) of the axlebox.

5. A sensorized axlebox-bearing unit according to one of the preceding claims, **characterized in that** the circumferential extension of the second ring stretch (21) defined by the box (27) is less than 180°; and **in that** the flat radial walls (31) of the box (27) are arranged so as to be non-parallel to each other, but to form an obtuse angle.

6. A sensorized axlebox-bearing unit according to one of the preceding claims, **characterized in that** the sensor module (11) and the connection plug (13) are carried on the box (27) defining the second ring stretch (21) so as to be fixed in different radial positions on the opposite sides (38, 39) of the box with respect to the symmetry axis (A).

7. A sensorized axlebox-bearing unit according to one of the preceding claims, **characterized in that** the connection plug (13) is mounted to a radially outer circumferential flat projection (40) of the radially outer cylindrical lateral wall (28) of the box and comprises a female connector (41) and a pair of stud bolts (42) for fixing in use, on the second ring stretch (21), a male connector (43) provided with a transmission cable (44) or with a unit for wireless transmission toward the processing unit.

8. A sensorized axlebox-bearing unit according to one of the preceding claims, **characterized in that** the box (27) defining the second ring stretch (21) is radially provided, through the radially outer cylindrical lateral wall (28), with draining holes (45) arranged between the sensor module (11) and the connection plug (13).

9. A sensorized cover (17) for an axlebox-bearing unit (1) for supporting a railway axle (2), **characterized in that** it is a rear cover (17), designed to be mounted to the axlebox-bearing unit on the "inboard" side of the axle and **in that** it is made in the shape of a first (20) and a second (21) ring stretches, independent of each other, designed to close a rear inlet opening (19) of the axlebox-bearing unit and adapted to couple, in use, with a radially outer cylindrical lateral surface (24) of the axle; the first ring stretch (20) being defined by a semicircular profile flange (25) adapted to close a first circumferential portion (26) of the rear inlet opening; while the second ring stretch (21) is defined by a semicircular profile box (27) shaped as a polygonal radial section toroid delimited by a radially outer cylindrical lateral wall (28), by opposite first and second frontal walls (29, 30) having a semicircular profile and arranged substantially perpendicular to the lateral wall (28), and by a pair of flat radial walls (31) perpendicular to the frontal walls (29, 30) and adapted to couple in contact with respective radial end edges (32) of the first ring stretch (20), so that the box is internally hollow and has, toward a symmetry axis (A) thereof, a circumferential opening (33); a sensor module (11) being integrally carried, radially on the inside, by the radially outer cylindrical lateral wall (28) of the box, pre-assembled within the box (27) in a position facing the circumferential opening (33); a connection plug (13) of the sensor being integrally carried, radially on the outside, by the radially outer cylindrical lateral wall (28) of the box and being connected to the sensor module (11) by means of an electric cable (34) arranged within the box (27) and against the radially outer cylindrical lateral wall (28) of the box.

## Patentansprüche

1. Mit Sensoren versehene Radsatzlagereinheit (1) zum Stützen einer Eisenbahnachse (2), die ein Achslager (3), das ausgelegt ist, um in einer Ruhelage fixiert zu werden; ein Wälzlager (4), das innerhalb des Achslagers getragen wird und einen Innenring (5) umfasst, der ausgelegt ist, um während des Betriebs die Eisenbahnachse (2) aufzunehmen, um sie bezogen auf das Achslager um eine gemeinsame Symmetrieachse (A) rotieren zu lassen; eine Sensoreinheit (10), die ein Sensormodul (11) umfasst, das am Achslager und in der Nähe des Innenrings (5) des Lagers fest verbaut montiert ist und mit einer Mehrzahl an Übertragungselementen (12) zum Überwachen der Achse und mit einem Verbindungsstecker (13) zum Verbinden mit einer elektronischen Datenverarbeitungseinheit (14) versehen ist; jeweilige Abdichtungsbaugruppen (15), die angeordnet sind, um das Wälzlager zu schützen; und eine Frontabdeckung (16) und eine rückwärtige Abdeckung (17), um einander gegenüberliegende erste (19) und zweite (18) stirnseitige kreisförmige Einlassöffnungen des Achslagers zu verschließen, umfasst; **dadurch gekennzeichnet, dass** in Kombination:
i) - die rückwärtige Abdeckung (17) in Form zweier voneinander unabhängiger ringförmiger Spanner (20; 21) hergestellt ist, die fest verbaut mittels jeweiliger Schrauben (22, 23) an der ersten rückwärtigen Einlassöffnung (19) des Achslagers fixiert sind und während des Betriebs einer "nach innen gerichteten" Seite der Achse (2) zugewandt sind; wobei die zwei ringförmigen Spanner (20, 21) ausgelegt sind, um während des Betriebs an eine radial äußere zylindrische Seitenfläche (24) der Achse (2) anzukuppeln;
ii) - ein erster ringförmiger Spanner (20) durch einen halbkreisförmigen Profilflansch (25) definiert ist, der angeordnet ist, um einen ersten Umfangsabschnitt (26) der rückwärtigen Einlassöffnung (19) des Achslagers (3) zu schließen;
iii) - der zweite ringförmige Spanner (21) durch einen halbkreisförmigen Profilkasten (27) definiert ist, der als polygonaler Toroid mit Radialabschnitten geformt ist, der von einer radial äußeren zylindrischen Seitenwand (28), die zur Symmetrieachse A koaxial ist, von einander gegenüberliegenden ersten (29) und zweiten (30) Stirnwänden mit einem halbkreisförmigen Profil, die im Wesentlichen senkrecht zur Symmetrieachse (A) angeordnet sind, und von einem Paar flacher radialer Wände (31), die zu den Stirnwänden (29, 30) senkrecht sind und ausgelegt sind, um in Berührung an jeweilige radiale Endkanten (32) des ersten ringförmigen Spanners (20) anzukuppeln, begrenzt wird, so dass der Kasten (27) innenseitig hohl ist und in Richtung der Symmetrieachse (A) eine umlaufende Öffnung (33) aufweist, die der Symmetrieachse (A) zugewandt ist; wobei der zweite ringförmige Spanner (21) unabhängig vom ersten ringförmigen Spanner (20) mit der rückwärtigen Einlassöffnung (19) des Achslagers fest verbaut fixiert ist;
iv) - das Sensormodul (11) radial innenseitig von der radial äußeren zylindrischen Seitenwand (28) des Kastens (27) fest verbaut getragen wird und innerhalb des Kastens in einer der umlaufenden Öffnung (33) zugewandten Position vormontiert wird, während der Verbindungsstecker (13) radial auf der Außenseite von der radial äußeren zylindrischen Seitenwand (28) des Kastens fest verbaut getragen wird und mit dem Sensormodul (11) mittels eines innerhalb des Kastens (27) und gegen die radial äußere zylindrische Seitenwand (28) des Kastens angeordneten Elektrokabels (34) verbunden ist.

2. Mit Sensoren versehene Radsatzlagereinheit nach Anspruch 1, **dadurch gekennzeichnet, dass** die einander gegenüberliegenden ein halbkreisförmiges Profil aufweisenden ersten und zweiten Stirnwände (29, 30) im Wesentlichen flach und zur radial äußeren zylindrischen Seitenwand (28) des Kastens senkrecht sind.

3. Mit Sensoren versehene Radsatzlagereinheit nach Anspruch 1 oder 2, **dadurch gekennzeichnet, dass** der den zweiten ringförmigen Spanner (21) definierende Kasten (27) mit wenigstens einem Paar axialer Löcher (35) versehen ist, die durch eine radiale Dicke der radial äußeren zylindrischen Seitenwand (28) und durch jeweilige radial äußere Außenkanten (36) der ersten und zweiten Stirnwände (29, 30) ausgeführt sind, wobei mit jeweiligen Befestigungsschrauben (23) in die axialen Löcher (35) eingegriffen wird, um am Achslager (3) fixiert zu sein.

4. Mit Sensoren versehene Radsatzlagereinheit nach Anspruch 3, **dadurch gekennzeichnet, dass** die radial äußere Außenkante (36) der ersten Stirnwand (29), die dem Achslager (3) zugewandt ist, mit einem halbkreisförmigen zylindrischen Vorsprung (37) versehen ist, der eine umlaufende Erweiterung aufweist, die der des Kastens (27) gleichkommt und die innerhalb der ersten stirnseitigen kreisförmigen Einlassöffnung (19) des Achslagers ankuppelt.

5. Mit Sensoren versehene Radsatzlagereinheit nach einem der vorstehenden Ansprüche, **dadurch gekennzeichnet, dass** die vom Kasten (27) definierte umlaufende Erweiterung des zweiten ringförmigen Spanners (21) weniger als 180° beträgt; und dass die flachen radialen Wände (31) des Kastens (27) derart angeordnet sind, dass sie nicht parallel sind, sondern einen stumpfen Winkel bilden.

6. Mit Sensoren versehene Radsatzlagereinheit nach einem der vorstehenden Ansprüche, **dadurch gekennzeichnet, dass** das Sensormodul (11) und der Verbindungsstecker (13) an dem Kasten (27) getragen werden und den zweiten ringförmigen Spanner (21) derart definieren, dass sie in unterschiedlichen Radialpositionen bezogen auf die Symmetrieachse (A) auf den einander gegenüberliegenden Seiten (38, 39) des Kastens fixiert sind.

7. Mit Sensoren versehene Radsatzlagereinheit nach einem der vorstehenden Ansprüche, **dadurch gekennzeichnet, dass** der Verbindungsstecker (13) an einem radial äußeren umlaufenden flachen Vorsprung (40) der radial äußeren zylindrischen Seitenwand (28) des Kastens montiert ist und eine Steckbuchse (41) und ein Paar Gewindebolzen (42) aufweist, um während des Betriebs am zweiten ringförmigen Spanner (21) einen Stecker (43) zu befestigen, der mit einem Übertragungskabel (44) oder einer Einheit für drahtlose Übertragung an die Verarbeitungseinheit versehen ist.

8. Mit Sensoren versehene Radsatzlagereinheit nach einem der vorstehenden Ansprüche, **dadurch gekennzeichnet, dass** der den zweiten ringförmigen Spanner (21) definierende Kasten (27) durch die radial äußere zylindrische Seitenwand (28) radial mit Wasserablauflöchern (45) versehen ist, die zwischen dem Sensormodul (11) und dem Verbindungsstecker (13) angeordnet sind.

9. Mit Sensoren versehene Abdeckung (17) für eine Radsatzlagereinheit (1) zum Stützen einer Eisenbahnachse (2), **dadurch gekennzeichnet, dass** es sich um eine rückwärtige Abdeckung (17) handelt, die ausgelegt ist, um an der Radsatzlagereinheit auf der "nach innen gerichteten" Seite der Achse montiert zu werden und dadurch, dass sie in Form eines ersten (20) und eines zweiten (21) ringförmigen Spanners, die jeweils unabhängig voneinander sind, ausgeführt ist und konzipiert ist, um eine rückwärtige Einlassöffnung (19) der Radsatzlagereinheit zu schließen und ausgelegt ist, um während des Betriebs an eine radial äußere zylindrische Seitenfläche (24) der Achse anzukuppeln; wobei der erste ringförmige Spanner (20) durch einen halbkreisförmigen Profilflansch (25) definiert ist, der ausgelegt ist, um einen ersten Umfangsabschnitt (26) der rückwärtigen Einlassöffnung zu schließen; während der zweite ringförmige Spanner (21) durch einen halbkreisförmigen Profilkasten (27) definiert wird, der als polygonaler Toroid mit Radialabschnitten geformt ist, der von einer radial äußeren zylindrischen Seitenwand (28), von einander gegenüberliegenden ersten und zweiten Stirnwänden (29, 30) mit einem halbkreisförmigen Profil, die im Wesentlichen senkrecht zur Seitenwand (28) angeordnet sind, und von einem Paar flacher radialer Wände (31), die zu den Stirnwänden (29, 30) senkrecht sind und ausgelegt sind, um in Berührung an jeweilige radiale Endkanten (32) des ersten ringförmigen Spanners (20) anzukuppeln, begrenzt wird, so dass der Kasten innenseitig hohl ist und in Richtung einer Symmetrieachse (A) derselben eine umlaufende Öffnung (33) aufweist; wobei ein Sensormodul (11) radial innenseitig von der radial äußeren zylindrischen Seitenwand (28) des Kastens fest verbaut getragen wird und innerhalb des Kastens (27) in einer der umlaufenden Öffnung (33) zugewandten Position vormontiert wird, wobei ein Verbindungsstecker (13) radial auf der Außenseite von der radial äußeren zylindrischen Seitenwand (28) des Kastens fest verbaut getragen wird und mit dem Sensormodul (11) mittels eines innerhalb des Kastens (27) und gegen die radial äußere zylindrische Seitenwand (28) des Kastens angeordneten Elektrokabels (34) verbunden ist.

## Revendications

1. Unité de boîte d'essieu et palier à capteur (1) servant à supporter un essieu ferroviaire (2), comprenant une boîte d'essieu (3) conçue pour être fixée dans une position stationnaire ; un palier à roulement (4) supporté à l'intérieur de la boîte d'essieu et comprenant une bague intérieure (5) conçue pour recevoir, en cours d'utilisation, l'essieu ferroviaire (2) de façon à ce qu'il puisse tourner par rapport à la boîte d'essieu autour d'un axe de symétrie commun (A) ; une unité de capteur (10) comprenant un module de capteur (11) installé d'un seul tenant sur la boîte d'essieu et à proximité de la bague intérieure (5) du palier, et pourvu d'une pluralité d'éléments de transmission (12) servant à contrôler l'essieu et d'un bouchon de connexion (13) destiné à être connecté à une unité de traitement de données électronique (14) ; des ensembles d'étanchéité (15) respectifs disposés de façon à protéger le palier à roulement ; et un couvercle avant (16) et un couvercle arrière (17) destinés à fermer des première (19) et seconde (18) ouvertures d'entrée frontales circulaires de la boîte d'essieu ; **caractérisée en ce que**, en combinaison :
i) le couvercle arrière (17) est réalisé sous la forme de deux segments d'anneau indépendants (20, 21) fixés d'un seul tenant, au moyen de vis (22, 23) respectives, à la première ouverture d'entrée arrière (19) de la boîte d'essieu, faisant face en cours d'utilisation à un côté « intérieur » de l'essieu (2) ; les deux segments d'anneau (20, 21) étant conçus pour s'accoupler, en cours d'utilisation, avec une surface latérale (24) cylindrique radialement extérieure de l'essieu (2) ;
ii) un premier segment d'anneau (20) étant défini par une bride (25) de profil semi-circulaire disposée de façon à fermer une première partie circonférentielle (26) de l'ouverture d'entrée arrière (19) de la boîte d'essieu (3) ;
iii) le second segment d'anneau (21) étant défini par un boîtier (27) de profil semi-circulaire réalisé sous la forme d'un tore de section radiale polygonale délimité par une paroi latérale (28) cylindrique radialement extérieure qui est coaxiale avec l'axe de symétrie (A), par des première (29) et seconde (30) parois frontales opposées présentant un profil semi-circulaire, qui sont disposées de manière essentiellement perpendiculaire à l'axe de symétrie (A), et par une paire de parois radiales (31) planes perpendiculaires aux parois frontales (29, 30) et conçues pour s'accoupler en contact avec des bords d'extrémité radiaux (32) respectifs du premier segment d'anneau (20), de telle sorte que le boîtier (27) comporte une partie intérieure creuse et comporte, vers l'axe de symétrie (A), une ouverture circonférentielle (33) faisant face à l'axe de symétrie (A) ; le second segment d'anneau (21) étant fixé d'un seul tenant à l'ouverture d'entrée arrière (19) de la boîte d'essieu indépendamment du premier segment d'anneau (20) ;
iv) le module de capteur (11) étant supporté d'un seul tenant, radialement du côté intérieur, par une paroi latérale (28) cylindrique radialement extérieure du boîtier (27), préassemblé à l'intérieur du boîtier dans une position faisant face à l'ouverture circonférentielle (33), tandis que le bouchon de connexion (13) est supporté d'un seul tenant, radialement du côté extérieur, par la paroi latérale (28) cylindrique radialement extérieure du boîtier et est connecté au module de capteur (11) au moyen d'un câble électrique (34) disposé à l'intérieur du boîtier (27) et contre la paroi latérale (28) cylindrique radialement extérieure du boîtier.

2. Unité de boîte d'essieu et palier à capteur selon la revendication 1, **caractérisée en ce que** les première et seconde parois frontales (29, 30) opposées présentant un profil semi-circulaire sont essentiellement planes et sont perpendiculaires à la paroi latérale (28) cylindrique radialement extérieure du boîtier.

3. Unité de boîte d'essieu et palier à capteur selon la revendication 1 ou 2, **caractérisée en ce que** le boîtier (27) définissant le second segment d'anneau (21) est pourvu d'au moins une paire de trous axiaux (35) réalisés à travers une épaisseur radiale de la paroi latérale (28) cylindrique radialement extérieure et à travers des bords périphériques (36) radialement extérieurs respectifs des première et seconde parois frontales (29, 30), des vis de fixation (23) respectives venant en prise dans lesdits trous axiaux (35) à des fins de fixation à la boîte d'essieu (3).

4. Unité de boîte d'essieu et palier à capteur selon la revendication 3, **caractérisée en ce que** le bord périphérique (36) radialement extérieur de la première paroi frontale (29), qui fait face à la boîte d'essieu (3), est pourvu d'une saillie (37) cylindrique semi-circulaire présentant une étendue circonférentielle égale à celle du boîtier (27) et qui s'accouple à l'intérieur de la première ouverture d'entrée circulaire frontale (19) de la boîte d'essieu.

5. Unité de boîte d'essieu et palier à capteur selon l'une des revendications précédentes, **caractérisée en ce que** l'étendue circonférentielle du second segment d'anneau (21) définie par le boîtier (27) est inférieure à 180° ; et **en ce que** les parois radiales (31) planes du boîtier (27) sont disposées de façon à ne pas être parallèles l'une à l'autre, mais à former un angle obtus.

6. Unité de boîte d'essieu et palier à capteur selon l'une des revendications précédentes, **caractérisée en ce que** le module de capteur (11) et le bouchon de connexion (13) sont supportés sur le boîtier (27) définissant le second segment d'anneau (21) de façon à être fixés dans des positions radiales différentes sur les côtés opposés (38, 39) du boîtier par rapport à l'axe de symétrie (A).

7. Unité de boîte d'essieu et palier à capteur selon l'une des revendications précédentes, **caractérisée en ce que** le bouchon de connexion (13) est installé sur une saillie (40) plane circonférentielle radialement extérieure de la paroi latérale (28) cylindrique radialement extérieure du boîtier et comprend un connecteur femelle (41) et une paire de goujons (42) servant à la fixation, en cours d'utilisation, sur le second segment d'anneau (21), d'un connecteur mâle (43) pourvu d'un câble de transmission (44) ou d'une unité permettant une transmission sans fil vers l'unité de traitement.

8. Unité de boîte d'essieu et palier à capteur selon l'une des revendications précédentes, **caractérisée en ce que** le boîtier (27) définissant le second segment d'anneau (21) est pourvu radialement, à travers la paroi latérale (28) cylindrique radialement extérieure, de trous d'évacuation (45) disposés entre le module de capteur (11) et le bouchon de connexion (13).

9. Couvercle à capteur (17) pour une unité de boîte d'essieu et palier (1) servant à supporter un essieu ferroviaire (2), **caractérisé en ce qu'**il s'agit d'un couvercle arrière (17), conçu pour être installé sur l'unité de boîte d'essieu et palier du côté « intérieur » de l'essieu et **en ce qu'**il est réalisé sous la forme d'un premier (20) et d'un second (21) segment d'anneau, indépendants l'un de l'autre, conçus pour fermer une ouverture d'entrée arrière (19) de l'unité de boîte d'essieu et palier et conçus pour s'accoupler, en cours d'utilisation, avec une surface latérale (24) cylindrique radialement extérieure de l'essieu ; le premier segment d'anneau (20) étant défini par une bride (25) de profil semi-circulaire conçue pour fermer une première partie circonférentielle (26) de l'ouverture d'entrée arrière ; tandis que
le second segment d'anneau (21) est défini par un boîtier (27) de profil semi-circulaire réalisé sous la forme d'un tore de section radiale polygonale délimité par une paroi latérale (28) cylindrique radialement extérieure, par des première et seconde parois frontales (29, 30) opposées présentant un profil semi-circulaire et disposées de manière essentiellement perpendiculaire à la paroi latérale (28), et par une paire de parois radiales (31) planes perpendiculaires aux parois frontales (29, 30) et conçues pour s'accoupler en contact avec des bords d'extrémité radiaux (32) respectifs du premier segment d'anneau (20), de telle sorte que le boîtier comporte une partie intérieure creuse et comporte, vers un axe de symétrie (A) de celui-ci, une ouverture circonférentielle (33) ; un module de capteur (11) étant supporté d'un seul tenant, radialement du côté intérieur, par la paroi latérale (28) cylindrique radialement extérieure du boîtier, préassemblé à l'intérieur du boîtier (27) dans une position faisant face à l'ouverture circonférentielle (33) ; un bouchon de connexion (13) du capteur étant supporté d'un seul tenant, radialement du côté extérieur, par la paroi latérale (28) cylindrique radialement extérieure du boîtier et étant connecté au module de capteur (11) au moyen d'un câble électrique (34) disposé à l'intérieur du boîtier (27) et contre la paroi latérale (28) cylindrique radialement extérieure du boîtier.
